# EUROPEAN PATENT SPECIFICATION

(11) **EP 3 667 541 B1**
(45) Date of publication and mention of the grant of the patent: **17.02.2021**
(21) Application number: 19176164.2
(22) Date of filing: 23.05.2019
(51) Int. Cl.: G06F 21/62, G06F 11/14, G06F 21/44

(54) **METHOD FOR PROTECTING CONNECTED CAR SERVICE INFORMATION**
VERFAHREN ZUM SCHUTZ VON DIENSTINFORMATIONEN VERBUNDENER FAHRZEUGE
PROCÉDÉ DE PROTECTION D'INFORMATIONS DE SERVICE DE VOITURE CONNECTÉE

(30) Priority: 12.12.2018 KR 20180159726
(43) Date of publication of application: 17.06.2020
(73) Proprietor: HYUNDAI MOTOR COMPANY, Seoul 06797 (KR); Kia Motors Corporation, Seoul 06797 (KR)
(72) Inventor: KO, Jae Yoon, 18280 Gyeonggi-do (KR)
(74) Representative: Isarpatent

(56) References cited:
- EP-A1- 2 051 182
- US-A1- 2009 144 341
- US-A1- 2014 090 087
- US-A1- 2017 046 533

## Description

### TECHNICAL FIELD

The present disclosure relates to a method for protecting connected car service information.

### BACKGROUND

In recent years, connected cars have been increasingly studied and developed. The connected cars refer to cars that are outfitted with information and communication technology and are capable of providing interactive internet services, a mobile service, or the like.

A driver of a connected car may remotely turn on the ignition of the car or a heater inside the car and may receive various types of contents, such as weather, news, music, and the like, in real time.

The history of the connected car service provided to the driver includes information, such as the driver's taste or a travel path and travel time, through which personal propensities can be identified. Therefore, the driver may have difficulty in social life if the connected car service history is exposed to other people. EP 2 051 182 A1 discloses that a communication apparatus automatically extracts data items that a user wishes to protect from data items stored in a data storing section, and then automatically transfers extracted data items to a communication device. The data storing section stores data. A data managing section automatically extracts a data item to be transferred to the communication device from the data items of the data, with reference to protected data definition information, and generates an additional information list, in which the data item to be transferred is included. The data managing section transfers the data item to be transferred to the communication device with reference to the additional information list, when a power supply managing section detects a power OFF event. US 2009/144341 A1 discloses a method for processing of user-specific data in control systems of a vehicle, such as a navigation system or an entertainment system. For this purpose, the device for processing user-specific data is expanded by a private operating mode. In this private operating mode, there is no persistent storage of user inputs and/or the resulting processing results. After termination of the newly created private operating mode, the data stored during the private operating mode is deleted immediately.

For example, when the driver lends the car to someone else or takes the car to a shop for repairs, service or usage history information stored in a connected car terminal may be exposed to other people. Accordingly, a way for protecting the service or usage history information is required.

### SUMMARY

The present disclosure has been made to solve the above-mentioned problems occurring in the prior art while advantages achieved by the prior art are maintained intact.

The invention is defined by the appended independent claims. Dependent claims constitute embodiments of the invention.

### BRIEF DESCRIPTION OF THE DRAWINGS

The above and other objects, features and advantages of the present disclosure will be more apparent from the following detailed description taken in conjunction with the accompanying drawings:
FIG. 1 is an exemplary view illustrating a configuration of a connected car service system to which the present disclosure is applied;
FIG. 2 is a sequence diagram illustrating a connected car service information protection method according to a first embodiment of the present disclosure;
FIG. 3 is a sequence diagram illustrating a connected car service information protection method according to a second embodiment of the present disclosure;
FIG. 4 is a sequence diagram illustrating a backup data recovery process that may be added to the connected car service information protection method according to the first embodiment of the present disclosure;
FIG. 5 is a sequence diagram illustrating a backup data recovery process that may be added to the connected car service information protection method according to the second embodiment of the present disclosure; and
FIG. 6 is a block diagram illustrating a computing system for executing the connected car service information protection methods according to the embodiments of the present disclosure.

### DETAILED DESCRIPTION

Hereinafter, some embodiments of the present disclosure will be described in detail with reference to the exemplary drawings. In adding the reference numerals to the components of each drawing, it should be noted that the identical or equivalent component is designated by the identical numeral even when they are displayed on other drawings. Further, in describing the embodiment of the present disclosure, a detailed description of well-known features or functions will be ruled out in order not to unnecessarily obscure the gist of the present disclosure.

In describing the components of the embodiment according to the present disclosure, terms such as first, second, "A", "B", (a), (b), and the like may be used. These terms are merely intended to distinguish one component from another component, and the terms do not limit the nature, sequence, or order of the constituent components. Unless otherwise defined, all terms used herein, including technical or scientific terms, have the same meanings as those generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

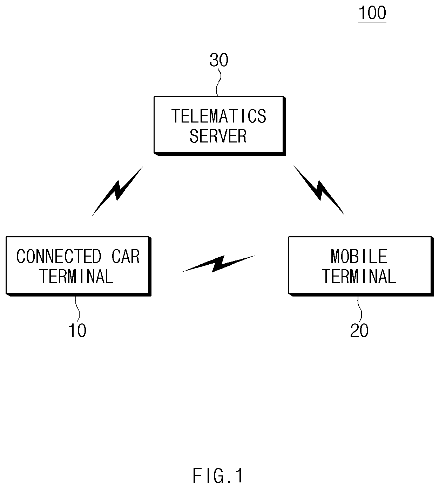

FIG. 1 is an exemplary view illustrating a configuration of a connected car service system 100 to which the present disclosure pertains.

As illustrated in FIG. 1, the connected car service system 100, to which the present disclosure pertains, may include a connected car terminal 10, a mobile terminal 20, and a telematics server 30. The components may be integrated together in accordance with manners of carrying out the connected car service system 100 to which the present disclosure pertains. In addition, some of the components may be omitted in accordance with manners of carrying out the present disclosure.

The connected car terminal 10 is mounted in a vehicle and has a user interface function, a communication function, and a control function. The connected car terminal 10 serves to provide a connected car service to a user.

The connected car terminal 10 may generate backup data including connected car service or usage information in response to a reset request from the user. In this case, the connected car service information may include connected car service or usage history information representing a history of manners in which the user used the connected car service, various types of personal information (e.g., a telephone number list, a name, an address, an account number, and the like) input by the user, a point of interest (POI) set by the user during the use of the connected car service, search data, and the like.

The connected car terminal 10 may read backup data from the mobile terminal 20 and may recover the backup data.

The connected car terminal 10 may communicate with the mobile terminal 20 via short range wireless communication or wireless Internet. Here, the short range wireless communication may include Bluetooth™, radio frequency identification (RFID), infrared data association (IrDA), ultra wideband (UWB), ZigBee, near field communication (NFC), wireless universal serial bus (wireless USB), or the like. The wireless Internet may include wireless LAN (WLAN), wireless-fidelity (Wi-Fi), wireless fidelity (Wi-Fi) direct, digital living network alliance (DLNA), wireless broadband (WiBro), world interoperability for microwave access (WiMAX), high speed downlink packet access (HSDPA), high speed uplink packet access (HSUPA), long term evolution (LTE), long term evolution-advanced (LTE-A), or the like.

Also, the connected car terminal 10 may communicate with the telematics server 30 via mobile communication or wireless Internet. Here, the mobile communication may include global system for mobile communication (GSM), code division multi access (CDMA), code division multi access 2000 (CDMA 2000), enhanced voice-data optimized or enhanced voice-data only (EV-DO), wideband CDMA (WCDMA), high speed downlink packet access (HSDPA), high speed uplink packet access

(HSUPA), long term evolution (LTE), long term evolution-advanced (LTE-A), or the like.

The mobile terminal 20 is a terminal capable of short range wireless communication, mobile communication, and/or wireless Internet access. The mobile terminal 20 may include a smartphone, a portable notebook computer, a tablet PC, or the like.

The mobile terminal 20 may store backup data received from the connected car terminal 10 and may transmit the stored backup data to the connected car terminal 10.

The mobile terminal 20 may communicate with the connected car terminal 10 via short range wireless communication or wireless Internet.

Also, the mobile terminal 20 may communicate with the telematics server 30 via mobile communication or wireless Internet.

The telematics server 30 receives the registration of the connected car terminal 10 and the mobile terminal 20 in advance. Of course, the user of the mobile terminal 20 can have a subscription to a telematics service.

The telematics server 30 may authenticate the user of the mobile terminal 20 and may transmit the authentication result to the connected car terminal 10. In this case, the authentication scheme may be a scheme to enter an ID and a password. However, the authentication scheme is not limited thereto.

The telematics server 30 may receive backup data from the connected car terminal 10 and may transmit the backup data to the mobile terminal 20 of the user in response to a request of the user.

The telematics server 30 may transfer backup data from the mobile terminal 20 of the user to the connected car terminal 10.

The telematics server 30 may serve to authenticate the user of the mobile terminal 20 and relay backup data between the connected car terminal 10 and the mobile terminal 20 of the user.

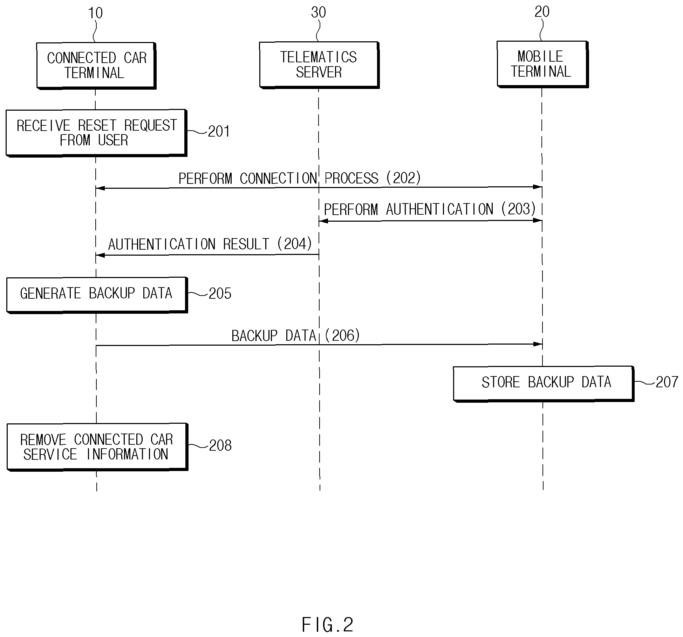

FIG. 2 is a sequence diagram illustrating a connected car service information protection method according to a first embodiment of the present disclosure.

When the connected car terminal 10 receives a reset request for a connected car service from the user (201), the connected car terminal 10 performs a connection process with the mobile terminal 20 of the user (202) (e.g., in response to completing step 201). In this case, information about the mobile terminal 20 of the user is already stored in the connected car terminal 10. Here, the connection process includes a discovery process and a setting process for communication between the connected car terminal 10 and the mobile terminal 20.

The mobile terminal 20 connected with the connected car terminal 10 accesses the telematics server 30 and performs authentication (203). Step 203 may be performed in response to establishing a successful connection in step 202. In this case, the telematics server 30 may authenticate the mobile terminal 20, or may authenticate the user of the mobile terminal 20. Here, the authentication is performed to determine whether the mobile terminal 20 is allowed to receive backup data stored in the connected car terminal 10. Accordingly, when the mobile terminal 20 is authenticated normally, the telematics server 30 determines that the mobile terminal 20 is allowed to receive the backup data stored in the connected car terminal 10.

The telematics server 30 transmits the authentication result of the mobile terminal 20 to the connected car terminal 10 (204) (e.g., in response to completing step 203).

The connected car terminal 10 generates backup data using connected car service or usage information that includes connected car service or usage history information, personal information, a point of interest (POI), search data, and the like (205) (e.g., in response to completing step 204).

The connected car terminal 10 transmits the backup data to the mobile terminal 20 (206) (e.g., in response to completing steps 204/205).

The mobile terminal 20 stores the received backup data (207).

The connected car terminal 10 removes the connected car service information (208) (e.g., in response to completing step 207). For example, the connected car terminal 10 removes the connected car service information from its local memory within the car or vehicle.

The first embodiment illustrates the process in which the mobile terminal 20 directly receives and stores the backup data from the connected car terminal 10.

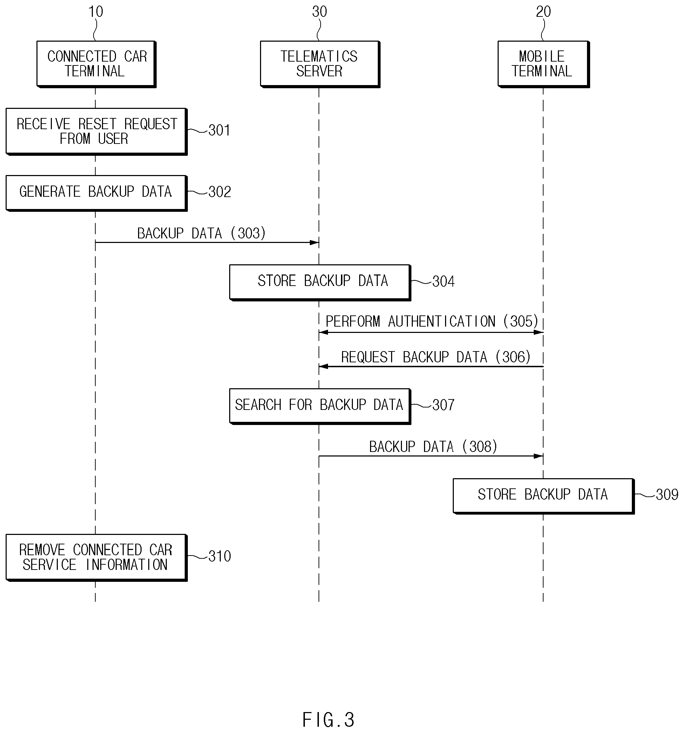

FIG. 3 is a sequence diagram illustrating a connected car service information protection method according to a second embodiment of the present disclosure.

When the connected car terminal 10 receives a reset request for a connected car service from the user (301), the connected car terminal 10 generates backup data using connected car service or usage information that includes connected car service or usage history information, personal information, a point of interest (POI), search data, and the like (302) (e.g., in response to completing step 301).

The connected car terminal 10 transmits the backup data to the telematics server 30 (303) (e.g., in response to completing step 302).

The telematics server 30 stores the received backup data (304) (e.g., in response to completing step 303).

The telematics server 30 performs authentication in response to an authentication request from the mobile terminal 20 (305) (e.g., in response to completing step 304). In this case, the telematics server 30 may authenticate the mobile terminal 20, or may authenticate the user of the mobile terminal 20. Here, the authentication is performed to determine whether the mobile terminal 20 is allowed to receive the backup data stored in the telematics server 30. Accordingly, when the mobile terminal 20 is authenticated normally, the telematics server 30 determines that the mobile terminal 20 is allowed to receive the backup data.

The mobile terminal 20 requests the backup data from the telematics server 30 (306) (e.g., in response to completing step 305).

The telematics server 30 searches for the backup data corresponding to the mobile terminal 20 among backup data stored in the telematics server 30 and transmits the found backup data to the mobile terminal 20 (307 and 308) (e.g., in response to completing step 306). In this case, the backup data is backup data generated by the connected car terminal 10 mounted in a vehicle that is specified by the user of the mobile terminal 20.

The mobile terminal 20 stores the received backup data (309) (e.g., in response to completing step 308).

The connected car terminal 10 removes the connected car service information (310). The connected car terminal 10 may remove the connected car service information (310) in response to the data being stored in the telematics server 30 (e.g., after step 304), or in response to the data being stored in the mobile terminal 20 (e.g., after step 309).

The second embodiment illustrates the process in which the mobile terminal 20 receives and stores the backup data from the connected car terminal 10 via the telematics server 30 when the mobile terminal 20 is incapable of accessing the connected car terminal 10.

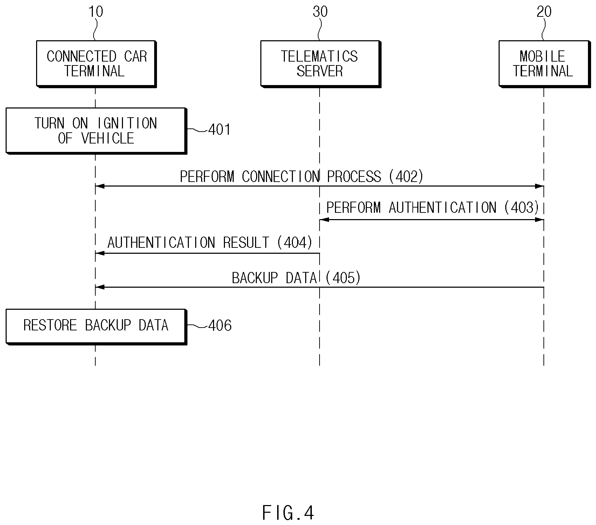

FIG. 4 is a sequence diagram illustrating a backup data recovery process that may be added to the connected car service or usage information protection method according to the first embodiment of the present disclosure.

When the ignition of the vehicle is turned on (401), the connected car terminal 10 performs a connection process with the mobile terminal 20 (402). In this case, the mobile terminal 20 is preferably located inside the vehicle.

The mobile terminal 20 accesses the telematics server 30 and performs an authentication process (403) (e.g., in response to completing step 402).

The telematics server 30 transmits the authentication result to the connected car terminal 10 (404) (e.g., in response to completing step 403). When the connected car terminal 10 receives an authentication result indicating that the mobile terminal 20 is authenticated normally, the connected car terminal 10 prepares to recover backup data.

The mobile terminal 20, which is authenticated normally, transmits backup data stored therein, to the connected car terminal 10 (405) (e.g., in response to completing steps 403/404).

The connected car terminal 10 recovers the received backup data (406) (e.g., in response to completing step 405).

The backup data recovery process is applicable when the connected car terminal 10 and the mobile terminal 20 are able to communicate with each other.

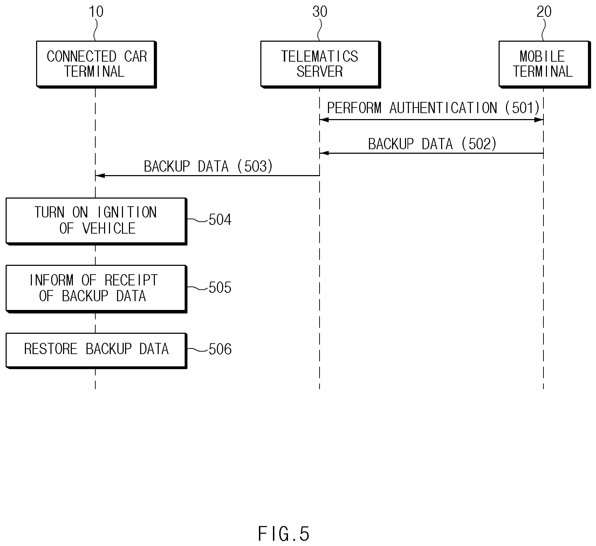

FIG. 5 is a sequence diagram illustrating a backup data recovery process that may be added to the connected car service information protection method according to the second embodiment of the present disclosure.

The mobile terminal 20 accesses the telematics server 30 and performs an authentication process (501).

The mobile terminal 20 that is authenticated normally transmits backup data stored therein, to the telematics server 30 (502) (e.g., in response to completing step 501).

The telematics server 30 transfers the backup data from the telematics server 30 to the connected car terminal 10 (503) (e.g., in response to completing step 502). In this case, the telematics server 30 transmits the backup data to the connected car terminal 10 that is previously specified by the user of the mobile terminal 20.

When the ignition of the vehicle is turned on (504) (e.g., following completion of step 503), the connected car terminal 10 outputs a guide sound or a guide message to inform the user that the backup data is received (505).

The connected car terminal 10 restores the received backup data when the user requests that the backup data is restored (506). Also, the connected car terminal 10 may restore the received backup data irrespective of the user's request (e.g., in response to completing steps 504/505).

The backup data recovery process is applicable when the connected car terminal 10 and the mobile terminal 20 are unable to communicate directly with each other.

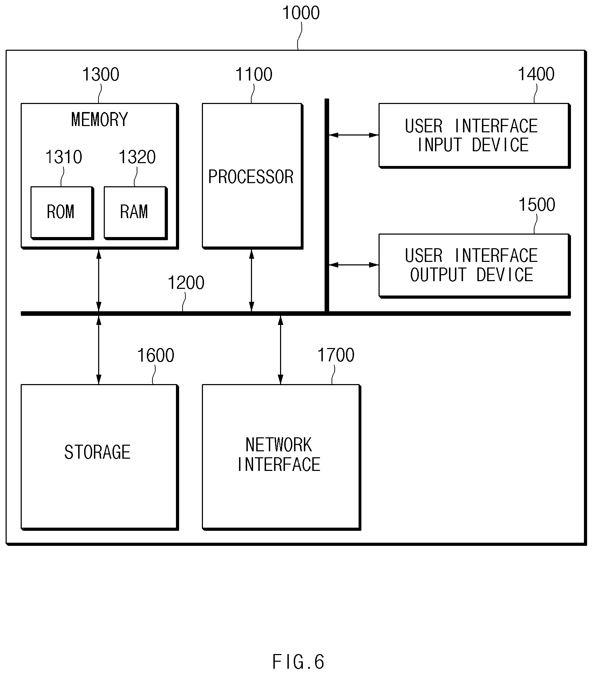

FIG. 6 is a block diagram illustrating a computing system 1000 for executing the connected car service information protection methods according to the embodiments of the present disclosure. The computing system 1000 may be used to implement the connected car terminal 10, the mobile terminal 20, and/or the telematics server 30.

Referring to FIG. 6, the connected car service information protection methods according to the embodiments of the present disclosure may be implemented through the computing system 1000. The computing system 1000 may include at least one processor 1100, a memory 1300, a user interface input device 1400, a user interface output device 1500, storage 1600, and a network interface 1700, which are connected with each other via a bus 1200.

The processor 1100 may be a central processing unit (CPU) or a semiconductor device that processes instructions stored in the memory 1300 and/or the storage 1600. The memory 1300 and the storage 1600 may include various types of volatile or non-volatile storage media. For example, the memory 1300 may include a ROM (Read Only Memory) and a RAM (Random Access Memory).

Thus, the operations of the methods or the algorithms described in connection with the embodiments disclosed herein may be embodied directly in hardware or a software module executed by one or more processor(s) 1100, or in a combination thereof. The software module may reside on a storage medium (that is, the memory 1300 and/or the storage 1600) such as a RAM memory, a flash memory, a ROM memory, an EPROM memory, an EEPROM memory, a register, a hard disk, a solid state drive (SSD), a removable disk, or a CD-ROM. The exemplary storage medium may be coupled to the processor 1100, and the processor 1100 may read information out of the storage medium and may record information in the storage medium. Alternatively, the storage medium may be integrated with the processor 1100. The processor 1100 and the storage medium may reside in an application specific integrated circuit (ASIC). The ASIC may reside within a user terminal. In another case, the processor 1100 and the storage medium may reside in the user terminal as separate components.

According to the embodiments of the present disclosure, the connected car service information protection methods back up the connected car service information stored in the connected car terminal onto the mobile terminal of the user in response to the user's request and restore the backup data stored in the user's mobile terminal to the connected car terminal, thereby preventing the user's connected car service information from being exposed to other people and enabling the backed up personal information to be utilized when a connected car service is provided later.

### REPRESENTATIVE FIGURE: FIG. 2

FIG. 1
   - 10:: CONNECTED CAR TERMINAL
   - 20:: MOBILE TERMINAL
   - 30:: TELEMATICS SERVER
FIG. 2
   - 10:: CONNECTED CAR TERMINAL
   - 20:: MOBILE TERMINAL
   - 30:: TELEMATICS SERVER
   - 201:: RECEIVE RESET REQUEST FROM USER
   - 202:: PERFORM CONNECTION PROCESS
   - 203:: PERFORM AUTHENTICATION
   - 204:: AUTHENTICATION RESULT
   - 205:: GENERATE BACKUP DATA
   - 206:: BACKUP DATA
   - 207:: STORE BACKUP DATA
   - 208:: REMOVE CONNECTED CAR SERVICE INFORMATION
FIG. 3
   - 10:: CONNECTED CAR TERMINAL
   - 20:: MOBILE TERMINAL
   - 30:: TELEMATICS SERVER
   - 301:: RECEIVE RESET REQUEST FROM USER
   - 302:: GENERATE BACKUP DATA
   - 303:: BACKUP DATA
   - 304:: STORE BACKUP DATA
   - 305:: PERFORM AUTHENTICATION
   - 306:: REQUEST BACKUP DATA
   - 307:: SEARCH FOR BACKUP DATA
   - 308:: BACKUP DATA
   - 309:: STORE BACKUP DATA
   - 310:: REMOVE CONNECTED CAR SERVICE INFORMATION
FIG. 4
   - 10:: CONNECTED CAR TERMINAL
   - 20:: MOBILE TERMINAL
   - 30:: TELEMATICS SERVER
   - 401:: TURN ON IGNITION OF VEHICLE
   - 402:: PERFORM CONNECTION PROCESS
   - 403:: PERFORM AUTHENTICATION
   - 404:: AUTHENTICATION RESULT
   - 405:: BACKUP DATA
   - 406:: RESTORE BACKUP DATA
FIG. 5
   - 10:: CONNECTED CAR TERMINAL
   - 20:: MOBILE TERMINAL
   - 30:: TELEMATICS SERVER
   - 501:: PERFORM AUTHENTICATION
   - 502:: BACKUP DATA
   - 503:: BACKUP DATA
   - 504:: TURN ON IGNITION OF VEHICLE
   - 505:: INFORM OF RECEIPT OF BACKUP DATA
   - 506:: RESTORE BACKUP DATA
FIG. 6
   - 1100:: PROCESSOR
   - 1300:: MEMORY
   - 1400:: USER INTERFACE INPUT DEVICE
   - 1500:: USER INTERFACE OUTPUT DEVICE
   - 1600:: STORAGE
   - 1700:: NETWORK INTERFACE

## Claims

1. A method for protecting connected car service information, the method comprising:
establishing a communication connection with a mobile terminal (20) by a connected car terminal (10) when the connected car terminal (10) receives (201) a reset request for a connected car service from a user;
generating (205) backup data (206) for the connected car service information by the connected car terminal (10);
transmitting the generated backup data (206) over the established communication connection to the mobile terminal (20) by the connected car terminal (10);
removing (208) the connected car service information by the connected car terminal (10); and
restoring (406) backup data received from the mobile terminal (20) by the connected car terminal (10),
wherein the restoring (406)of the backup data received from the mobile terminal (20) by the connected car terminal (10) includes:
establishing another communication connection with the mobile terminal (20); and
determining whether the mobile terminal (20) is a mobile terminal (20) specified in advance when the connected car terminal (10) receives an authentication result (404) indicating that the mobile terminal (20) is normally authenticated from a telematics server (30).

2. A method for protecting connected car service information, the method comprising:
generating (302) backup data (303) for the connected car service information by a connected car terminal (10); and
transmitting the backup data (303) to a mobile terminal (20) via a telematics server (30) by the connected car terminal (10),
wherein the transmitting of the backup data (303) to the mobile terminal (20) via the telematics server (30) by the connected car terminal (10) includes:
performing authentication (305) of the mobile terminal (20) by the telematics server (30);
searching (307) for backup data (303) corresponding to the mobile terminal (20) by the telematics server (30) when the mobile terminal (20) is normally authenticated; and
transferring the found backup data to the mobile terminal (20).

3. The method of claim 2, wherein the generating (302) of the backup data (303) for the connected car service information by the connected car terminal (10) is performed when the connected car terminal (10) receives (301) a reset request for a connected car service from a user.

4. The method of claim 3, further comprising:
removing (310) the connected car service information by the connected car terminal (10),
wherein the removing (310) of the connected car service information by the connected car terminal (10) is performed after the transmitting of the backup data to the mobile terminal (20) via the telematics server (30) by the connected car terminal (10).

5. The method of claim 4, further comprising:
restoring (506) backup data received from the mobile terminal (20) via the telematics server (30) by the connected car terminal (10),
wherein the restoring (506) of the backup data received from the mobile terminal (20) via the telematics server (30) by the connected car terminal (10) is performed after the removing (310) of the connected car service information by the connected car terminal (10).

6. The method of claim 5, wherein the restoring of the backup data received from the mobile terminal (20) via the telematics server (30) by the connected car terminal (10) includes:
accessing the telematics server (30) and performing authentication by the mobile terminal (20); and
transmitting backup data stored in the mobile terminal (20), to the connected car terminal (10) via the telematics server (30) by the mobile terminal (20).

7. The method of claim 6, wherein the restoring (506) of the backup data received from the mobile terminal (20) via the telematics server (30) by the connected car terminal (10) further includes:
informing (505) the user of the receipt of the backup data by the connected car terminal (10).

## Patentansprüche

1. Verfahren zum Schützen von Connected-Car-Service-Informationen, wobei das Verfahren umfasst:
Herstellen einer Kommunikationsverbindung mit einem mobilen Endgerät (20) durch ein Connected-Car-Endgerät (10), wenn das Connected-Car-Endgerät (10) eine
Zurücksetzungsanforderung für einen Connected-Car-Service von einem Benutzer empfängt (201);
Generieren (205) von Sicherungsdaten (206) für die Connected-Car-Service-Informationen durch das Connected-Car-Endgerät (10);
Senden der generierten Sicherungsdaten (206) über die hergestellte Kommunikationsverbindung an das mobile Endgerät (20) durch das Connected-Car-Endgerät (10);
Entfernen (208) der Connected-Car-Service-Informationen durch das Connected-Car-Endgerät (10); und
Wiederherstellen (406) der von dem mobilen Endgerät (20) empfangenen Sicherungsdaten durch das Connected-Car-Endgerät (10),
wobei das Wiederherstellen (406) der von dem mobilen Endgerät (20) empfangenen Sicherungsdaten durch das Connected-Car-Endgerät (10) umfasst:
Herstellen einer weiteren Kommunikationsverbindung mit dem mobilen Endgerät (20); und
Bestimmen, ob das mobile Endgerät (20) ein im Voraus spezifiziertes mobiles Endgerät (20) ist, wenn das Connected-Car-Endgerät (10) von einem Telematikserver (30) ein Authentifizierungsergebnis (404) empfängt, das anzeigt, dass das mobile Endgerät (20) normal authentifiziert wurde.

2. Verfahren zum Schützen von Connected-Car-Service-Informationen, wobei das Verfahren umfasst:
Generieren (302) von Sicherungsdaten (303) für die Connected-Car-Service-Informationen durch ein Connected-Car-Endgerät (10); und
Senden der Sicherungsdaten (303) an ein mobiles Endgerät (20) über einen Telematikserver (30) durch das Connected-Car-Endgerät (10),
wobei das Senden der Sicherungsdaten (303) an das mobile Endgerät (20) über den Telematikserver (30) durch das Connected-Car-Endgerät (10) umfasst:
Ausführen einer Authentifizierung (305) des mobilen Endgerätes (20) durch den Telematikserver (30);
Suchen (307) nach Sicherungsdaten (303), die dem mobilen Endgerät (20) entsprechen, durch den Telematikserver (30), wenn das mobile Endgerät (20) normal authentifiziert wurde; und
Übertragen der gefundenen Sicherungsdaten zu dem mobilen Endgerät (20).

3. Verfahren nach Anspruch 2, wobei das Generieren (302) der Sicherungsdaten (303) für die Connected-Car-Service-Informationen durch das Connected-Car-Endgerät (10) durchgeführt wird, wenn das Connected-Car-Endgerät (10) eine Zurücksetzungsanforderung für einen Connected-Car-Service von einem Benutzer empfängt (301).

4. Verfahren nach Anspruch 3, des Weiteren umfassend:
Entfernen (310) der Connected-Car-Service-Informationen durch das Connected-Car-Endgerät (10),
wobei das Entfernen (310) der Connected-Car-Service-Informationen durch das Connected-Car-Endgerät (10) nach dem Senden der Sicherungsdaten an das mobile Endgerät (20) über den Telematikserver (30) durch das Connected-Car-Endgerät (10) durchgeführt wird.

5. Verfahren nach Anspruch 4, des Weiteren umfassend:
Wiederherstellen (506) der von dem mobilen Endgerät (20) über den Telematikserver (30) empfangenen Sicherungsdaten durch das Connected-Car-Endgerät (10),
wobei das Wiederherstellen (506) der von dem mobilen Endgerät (20) über den Telematikserver (30) empfangenen Sicherungsdaten durch das Connected-Car-Endgerät (10) nach dem Entfernen (310) der Connected-Car-Service-Informationen durch das Connected-Car-Endgerät (10) durchgeführt wird.

6. Verfahren nach Anspruch 5, wobei das Wiederherstellen der von dem mobilen Endgerät (20) über den Telematikserver (30) empfangenen Sicherungsdaten durch das Connected-Car-Endgerät (10) umfasst:
Zugreifen auf den Telematikserver (30) und Ausführen einer Authentifizierung durch das mobile Endgerät (20); und
Senden von in dem mobilen Endgerät (20) gespeicherten Sicherungsdaten durch das mobile Endgerät (20) über den Telematikserver (30) an das Connected-Car-Endgerät (10).

7. Verfahren nach Anspruch 6, wobei das Wiederherstellen (506) der von dem mobilen Endgerät (20) über den Telematikserver (30) empfangenen Sicherungsdaten durch das Connected-Car-Endgerät (10) des Weiteren umfasst:
Informieren (505) des Benutzers über den Empfang der Sicherungsdaten durch das Connected-Car-Endgerät (10).

## Revendications

1. Procédé permettant de protéger des informations de service de voiture connectée, le procédé comprenant les étapes suivantes :
établir une connexion de communication avec un terminal mobile (20) au moyen d'un terminal de voiture connectée (10) lorsque le terminal de voiture connectée (10) reçoit (201) d'un utilisateur une demande de réinitialisation pour un service de voiture connectée ;
engendrer (205) des données de sauvegarde (206) des informations de service de voiture connectée, au moyen du terminal de voiture connectée (10) ;
transmettre les données de sauvegarde engendrées (206) via la connexion de communication établie au terminal mobile (20), au moyen du terminal de voiture connectée (10) ;
retirer (208) les informations de service de voiture connectée au moyen du terminal de voiture connectée (10) ;
et
restaurer (406) les données de sauvegarde reçues en provenance du terminal mobile (20), au moyen du terminal de voiture connectée (10),
dans lequel la restauration (406) des données de sauvegarde reçues en provenance du terminal mobile (20) par le terminal de voiture connectée (10) inclut les étapes suivantes :
établir une autre connexion de communication avec le terminal mobile (20) ; et
déterminer si le terminal mobile (20) est un terminal mobile (20) spécifié à l'avance lorsque le terminal de voiture connectée (10) reçoit un résultat d'authentification (404) indiquant que le terminal mobile (20) est normalement authentifié, en provenance d'un serveur télématique (30).

2. Procédé permettant de protéger des informations de service de voiture connectée, le procédé comprenant les étapes suivantes :
engendrer (302) des données de sauvegarde (303) des informations de service de voiture connectée, au moyen d'un terminal de voiture connectée (10) ; et
transmettre les données de sauvegarde (303) à un terminal mobile (20) par le biais d'un serveur télématique (30), au moyen du terminal de voiture connectée (10),
dans lequel la transmission des données de sauvegarde (303) au terminal mobile (20) par le biais du serveur télématique (30), au moyen du terminal de voiture connectée (10), inclut les étapes suivantes :
effectuer une authentification (305) du terminal mobile (20) au moyen du serveur télématique (30) ;
rechercher (307) des données de sauvegarde (303) correspondant au terminal mobile (20) au moyen du serveur télématique (30) lorsque le terminal mobile (20) est normalement authentifié ; et
transférer les données de sauvegarde trouvées au terminal mobile (20).

3. Procédé selon la revendication 2, dans lequel la génération (302) des données de sauvegarde (303) des informations de service de voiture connectée par le terminal de voiture connectée (10) est réalisée lorsque le terminal de voiture connectée (10) reçoit (301) d'un utilisateur une demande de réinitialisation pour un service de voiture connectée.

4. Procédé selon la revendication 3, comprenant en outre l'étape suivante :
retirer (310) les informations de service de voiture connectée au moyen du terminal de voiture connectée (10), dans lequel le retrait (310) des informations de service de voiture connectée par le terminal de voiture connectée (10) est effectué après la transmission des données de sauvegarde au terminal mobile (20) par le biais du serveur télématique (30) par le terminal de voiture connectée (10).

5. Procédé selon la revendication 4, comprenant en outre l'étape suivante :
restaurer (506) les données de sauvegarde reçues en provenance du terminal mobile (20) par le biais du serveur télématique (30), au moyen du terminal de voiture connectée (10),
dans lequel la restauration (506) des données de sauvegarde reçues en provenance du terminal mobile (20) par le biais du serveur télématique (30) par le terminal de voiture connectée (10) est réalisée après le retrait (310) des informations de service de voiture connectée par le terminal de voiture connectée (10).

6. Procédé selon la revendication 5, dans lequel la restauration des données de sauvegarde reçues en provenance du terminal mobile (20) par le biais du serveur télématique (30), au moyen du terminal de voiture connectée (10), inclut les étapes suivantes :
accéder au serveur télématique (30) et effectuer une authentification au moyen du terminal mobile (20) ; et
transmettre des données de sauvegarde stockées dans le terminal mobile (20) au terminal de voiture connectée (10), par le biais du serveur télématique (30), au moyen du terminal mobile (20).

7. Procédé selon la revendication 6, dans lequel la restauration (506) des données de sauvegarde reçues en provenance du terminal mobile (20) par le biais du serveur télématique (30), au moyen du terminal de voiture connectée (10), inclut en outre l'étape suivante :
informer (505) l'utilisateur de la réception des données de sauvegarde, au moyen du terminal de voiture connectée (10).
